# EUROPEAN PATENT APPLICATION

(11) **EP 4 606 872 A1**
(43) Date of publication of application: **27.08.2025**
(21) Application number: 23879538.9
(22) Date of filing: 22.09.2023
(51) Int. Cl.: C09D 11/54, B41M 5/00, C09D 11/322

(54) **INK SET AND INK-JET RECORDING METHOD**

(30) Priority: 19.10.2022 JP 2022167257
(71) Applicant: KONICA MINOLTA, INC., Tokyo 100-7015 (JP)
(72) Inventor: NIIZUMA Naoto, Tokyo 100-7015 (JP); TAGUCHI Ryo, Tokyo 100-7015 (JP)
(74) Representative: MFG Patentanwälte Meyer-Wildhagen Meggle-Freund Gerhard PartG mbB
(86) International application number: PCT/JP2023/034414
(87) International publication number: WO 2024/084890

(57) **Abstract**

The ink set according to the present invention comprises: ink containing at least a pigment; and a treating liquid containing at least an aggregating agent. The ink set is used to form an image by applying the ink and the treating liquid onto a recording medium and coalescing same. The static surface tension of the treating liquid falls within the range of 18-25 mN/m at 25°C. The dynamic surface tension of the treating liquid at a surface lifetime of 50 msec falls within the range of 25-35 mN/min at 25°C. The ink contains a polyolefin resin. The recording medium is a non-absorbable base material.

## Description

### Technical Field

The present invention relates to an ink set and an inkjet recording method. In particular, it is an object of the present invention to provide an ink set or the like having satisfactory ink storage stability, high image quality, and satisfactory adhesiveness to a non-absorbent base material in a two-liquid inkjet recording method.

### Background Art

In inkjet recording methods, it is known that image quality is degraded due to a liquid merging phenomenon, in which ink droplets merge together on a recording medium, or color bleeding, in which bleeding occurs between different colors.

As a means for solving these problems, a treatment liquid for aggregating a color material in an ink is ejected to cause the treatment liquid and the ink to coalesce on the recording medium before the treatment liquid dries. Thus, a two-liquid inkjet recording method in which an ink is suitably fixed to a recording medium without degrading image quality has been disclosed (for example, refer to Patent Document 1).

In addition, in recent years, inkjet printing technology has been developed for packaging materials for foods, beverages, daily necessities, and the like. Therefore, inks that are compatible with non-absorbent recording media such as plastic films are being developed. Polypropylene base materials used in packaging materials are nonpolar and crystalline, which makes it difficult for an ink to adhere to them. Therefore, there has been disclosed an inkjet recording method using a polyolefin resin that is suitably adhered to these base materials as a type of resin in an ink (e.g., see Patent Document 2).

In addition, there has been disclosed an inkjet recording method in which both high image quality and adhesiveness to a polypropylene base material are achieved by adopting a two-liquid inkjet recording method for an ink containing a polyolefin resin (for example, refer to Patent Document 3).

As described above, various plastic materials are used as packaging materials for foods, beverages, daily necessities, and the like. Inkjet recording on packaging materials has been required to have versatility to be compatible with these multiple base material types, which has been a problem.

In particular, on a printing surface with poor ink wettability, such as a polypropylene surface or a gravure ink surface to which corona discharge treatment has not been applied, a liquid merging phenomenon occurs in which landed ink droplets coalesce with each other. This is known to make image formation difficult.

In order to form a satisfactory image on such a printing surface with poor wettability, means for increasing the wettability of the ink by adding a surfactant or a wetting solvent is employed.

However, it is known that these additives are likely to impair the stability of the ink. In particular, from the viewpoint of adhesiveness to a plastic base material, a polyolefin resin is designed to have a small number of hydrophilic groups on the resin surface, and the addition amount of a dispersion aid is suppressed. Therefore, it is not preferable to add a large amount of a surfactant or a wetting solvent that increases wettability to the ink containing a polyolefin resin, from the viewpoint of the ink stability.

### Citation List

### Patent Literature

Patent Document 1: JP H08-52867A
Patent Document 2: JP 2013-193324A
Patent Document 3: JP 2014-024944A

### Summary of Invention

### Technical Problem

The present invention has been made in view of the above-mentioned problems and circumstances, and the problem to be solved is as follows. To provide an ink set and an inkjet recording method in which ink storage stability is satisfactory, image quality is high, and adhesiveness to a non-absorbent base material is satisfactory in a two-liquid inkjet recording method.

### Solution to Problem

In order to solve the above problem, the present inventors have found, in the process of studying the cause and the like of the above-mentioned problems, the importance of setting the static and dynamic surface tensions of the treatment liquid within specific ranges. As a result, even when an ink contains a polyolefin resin, the ink has satisfactory storage stability in a two-liquid inkjet recording method. Furthermore, an ink set and an inkjet recording method can be provided that have excellent image quality and satisfactory adhesiveness to a non-absorbent base material.

The object of the present invention described above is achieved by the following means.
1. An ink set comprising: an ink that contains at least a pigment; and a treatment liquid that contains at least an aggregating agent, wherein an image is formed by applying the ink and the treatment liquid to a recording medium and causing the ink and the treatment liquid to coalesce with each other, a static surface tension of the treatment liquid is within a range of 18 to 25 mN/m at 25°C, a dynamic surface tension of the treatment liquid is within a range of 25 to 35 mN/m at a surface lifetime of 50 msec at 25°C, the ink contains a polyolefin resin, and the recording medium is a non-absorbent base material.
2. The ink set according to item 1, wherein the static surface tension of the ink is within a range of 25 to 35 mN/m at 25°C, and the dynamic surface tension of the ink is within a range of 35 to 45 mN/min at a surface lifetime of 50 msec at 25°C.
3. The ink set according to item 1, wherein the polyolefin resin is an acid-modified polyolefin resin.
4. The ink set according to item 1, wherein the treatment liquid contains a trisiloxane-based surfactant.
5. The ink set according to item 1, wherein the ink contains polyolefin resin particles having a mean particle size within a range of 10 to 80 nm and resin particles having a mean particle size within a range of 100 to 300 nm.
6. The ink set according to item 1, wherein the ink contains polyolefin resin particles having a mean particle size within a range of 10 to 80 nm and polyolefin resin particles having a mean particle size within a range of 100 to 300 nm.
7. The ink set according to item 1, wherein a mean particle size of particles of the pigment is within a range of 50 to 100 nm.
8. The ink set according to item 1, wherein the ink contains a wax.
9. An inkjet recording method comprising recording the image on the recording medium by using the ink set according to any one of items 1 to 8.
10. The inkjet recording method according to item 9, wherein an application amount of the treatment liquid per unit area on which the image is formed is 5.0 g/m² or less.

### Advantageous Effects of Invention

According to the above-described means of the present invention, it is possible to provide an ink set and an ink jet recording method that have satisfactory ink storage stability and excellent image quality and adhesiveness to a non-absorbent base material in a two-liquid inkjet recording method.

Although the realization mechanism or action mechanism of the effects of the present invention is not clear, the inventors infer the mechanism as follows.

In the present invention, the static surface tension and the dynamic surface tension of the treatment liquid are set within the specific ranges. When the static surface tension and the dynamic surface tension are lower than the specific ranges, the treatment liquid expands and spreads excessively, thereby deteriorating character reproducibility. On the other hand, when the static surface tension and the dynamic surface tension are higher than the specific ranges, the treatment liquid is repelled by the base material, thereby deteriorating the character reproducibility.

Thus, in the present invention, by adjusting the static surface tension and the dynamic surface tension of the treatment liquid to be within the specific ranges, it is possible to minimize the addition of a surfactant or a wetting solvent to increase the wettability of the ink. For example, even when a surfactant or the like is used, it is possible to use a surfactant or the like that does not significantly impair the storage stability of the ink, or to suppress the use to such an extent that the storage stability is not impaired. In particular, when a polyolefin resin is used, the effect is particularly significant.

Therefore, even when an ink containing a polyolefin resin is used, high wettability is ensured for a non-absorbent base material, and the quality of the formed image (in particular, character reproducibility) is excellent. Furthermore, the adhesiveness to a non-absorbent base material is also excellent.

It has also been known that when an ink containing a dispersed resin is dried to form a coating film, the dispersed particle size is reduced to improve a film-forming property and to enhance adhesiveness to a base material. On the other hand, it was found that, in an ink coating film formed on a non-absorbent base material by a two-liquid inkjet recording method, the coating film was cracked by drying the ink due to an aggregation reaction, resulting in reduced solid uniformity. In particular, it was found that when the particle size of the dispersed resin particles in the ink is small, this effect is particularly noticeable. Therefore, in the present invention, it is preferable to mix polyolefin resins having two different particle size ranges in the ink. This provides a satisfactory film-forming property and prevents the coating from cracking. The two particle size ranges are preferably a range of a mean particle size of 10 to 80 nm and a range of a mean particle size of 100 to 300 nm. Furthermore, a mixture of a polyolefin resin having a small size and a resin having a large size other than a polyolefin resin may be used.

### Brief Description of Drawings

[FIG. 1A] This is a diagram for explaining a state in which a treatment liquid and an ink according to the present invention coalesce.
[FIG. 1B] This is a diagram for explaining a state in which the treatment liquid and the ink according to the present invention coalesce.
[FIG. 1C] This is a diagram for explaining a state in which the treatment liquid and the ink according to the present invention coalesce.
[FIG. 2] This is a schematic diagram illustrating a recording apparatus preferable for the present invention.
[FIG. 3] This is a cross-sectional view of a canned food packaging material.

### Description of Embodiments

An ink set according to the present invention is an ink set comprising: an ink that contains at least a pigment; and a treatment liquid that contains at least an aggregating agent, wherein an image is formed by applying the ink and the treatment liquid to a recording medium and causing the ink and the treatment liquid to coalesce with each other, a static surface tension of the treatment liquid is within a range of 18 to 25 mN/m at 25°C, a dynamic surface tension of the treatment liquid is within a range of 25 to 35 mN/m at a surface lifetime of 50 msec at 25°C, the ink contains a polyolefin resin, and the recording medium is a non-absorbent base material.

The above-described features are technical features common to or corresponding to the following embodiments.

In an embodiment of the present invention, the ink preferably has a static surface tension within a range of 25 to 35 mN/m at 25°C. In addition, the dynamic surface tension of the ink at a surface lifetime of 50 msec is preferably within a range of 35 to 45 mN/min at 25°C. When the static surface tension and the dynamic surface tension of the ink are within the above ranges, the ink has satisfactory storage stability and can be stably ejected from an inkjet head.

In addition, it is preferable that the polyolefin resin is an acid-modified polyolefin resin from the viewpoint of obtaining high character reproducibility in a two-liquid inkjet recording method.

In addition, it is preferable that the treatment liquid contains a trisiloxane-based surfactant from the viewpoint of obtaining high character reproducibility in a two-liquid inkjet recording method.

Furthermore, the ink preferably contains polyolefin resin particles having a mean particle size (mean particle diameter) within a range of 10 to 80 nm and resin particles having a mean particle size within a range of 100 to 300 nm. By mixing two types of resins having different particle size ranges as described above, an excellent film-forming property can be achieved, and coating cracks can be prevented.

The resin particles having a mean particle size within a range of 100 to 300 nm may be resin particles other than polyolefin resin particles but are preferably polyolefin resin particles.

The reason why the mean particle size of the resin particles is within the above range is that when the mean particle size is 10 nm or more, the film formability of the resin during drying of the ink does not become excessively high, and nozzle clogging can be prevented. In addition, when the mean particle size of the resin particles is 300 nm or less, the particle size does not become too large, and thus the ejection property of the inkjet head becomes satisfactory. As a result, the film formability becomes satisfactory, and the adhesiveness to the base material also becomes satisfactory.

Furthermore, it is preferable that the mean particle size of the particles contained in the pigment is within a range of 50 to 100 nm from the viewpoint of excellent ink adhesiveness to the non-absorbent base material.

In addition, the ink preferably contains a wax from the viewpoint of excellent ink adhesiveness to the non-absorbent base material.

In an inkjet recording method according to the present invention, an image is recorded on a recording medium by using the ink set. As a result, even in a two-liquid inkjet recording method, the ink has satisfactory storage stability and is excellent in image quality and adhesiveness to the non-absorbent base material.

The application amount of the treatment liquid per unit area on which the image is formed is preferably 5.0 g/m² or less from the viewpoint of obtaining high character reproducibility in a two-liquid inkjet recording method.

Hereinafter, the present invention and constituent elements thereof, and modes and aspects for carrying out the present invention will be described. In the present description, when two figures are used to indicate a range of value before and after "to", these figures are included in the range as a lower limit value and an upper limit value.

### [Outline of Ink Set according to the Present Invention]

The ink set according to the present invention is an ink set comprising: an ink that contains at least a pigment; and a treatment liquid that contains at least an aggregating agent, wherein an image is formed by applying the ink and the treatment liquid to a recording medium and causing the ink and the treatment liquid to coalesce with each other, a static surface tension of the treatment liquid is within a range of 18 to 25 mN/m at 25°C, a dynamic surface tension of the treatment liquid is within a range of 25 to 35 mN/m at a surface lifetime of 50 msec at 25°C, the ink contains a polyolefin resin, and the recording medium is a non-absorbent base material.

The terms "treatment liquid" and "ink" as used in the present invention refer to a "treatment liquid (also referred to as "pretreatment liquid" or "primer")" and an "ink (also referred to as "water-based ink" or "aqueous ink")" that use at least water or a water-soluble solvent as a solvent. In either case, 60% by mass or more of the solvent to be used is preferably "water".

The term "coalescing" as used in the present invention refers to causing droplets of the treatment liquid and the ink to overlap with each other or come into contact with each other on a recording medium so that their components are mixed together to form one liquid body, ultimately forming one pixel that constitutes an image.

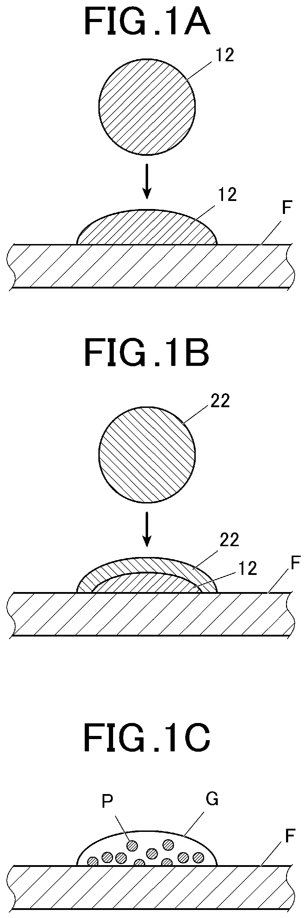

For example, as illustrated in FIG. 1A, before an ink is landed on a recording medium, a treatment liquid droplet 12 is landed on the recording medium F via an inkjet head. After the landing of the treatment liquid, as illustrated in FIG. 1B, an ink droplet 22 is landed on the recording medium F on which the treatment liquid has been landed. As a result, as illustrated in FIG. 1C, the treatment liquid droplet 12 and the ink droplet 22 are mixed, and pigments P in the ink are aggregated and precipitated by an aggregating agent in the treatment liquid. Then, an image layer G is formed on the recording medium F.

Note that a treatment liquid may be landed after an ink is landed on the recording medium.

### < Static Surface Tension >

In the present invention, the term "static surface tension" refers to the surface tension when the liquid surface reaches equilibrium as the components in the ink or treatment liquid diffuse over the course of the surface lifetime.

The static surface tension of the ink or the treatment liquid can be measured with an automatic surface tensiometer (for example, "CBVP-Z" manufactured by Kyowa Interface Science Co., Ltd.) using a platinum plate. Unless otherwise specified, the static surface tension herein is the static surface tension measured at 25°C.

In the ink set according to the present invention, the static surface tension of the treatment liquid is within a range of 18 to 25 mN/m at 25°C. Here, the reason why the static surface tension of the treatment liquid is set within the above range is that when the static surface tension of the treatment liquid is lower than 18 mN/m, the treatment liquid expands and spreads excessively, thereby deteriorating the character reproducibility. On the other hand, when the static surface tension of the treatment liquid is higher than 25 mN/m, the treatment liquid is repelled by the base material, thereby deteriorating the character reproducibility.

Furthermore, in the ink set according to the present invention, the static surface tension of the ink is preferably within a range of 25 to 35 mN/m at 25°C. By setting the static surface tension of the ink within the above range, the storage stability of the ink is improved, and the ink can be stably ejected onto the recording medium.

### < Dynamic Surface Tension >

In the present invention, the term "dynamic surface tension" refers to the surface tension immediately after a liquid surface (gas-liquid interface) is formed and when the liquid surface is in a non-equilibrium state. The dynamic surface tension is measured at 25°C by the maximum bubble pressure method.

The "surface lifetime" is the time elapsed since the formation of the liquid surface, i.e. the lifetime of an air bubble generated by the maximum bubble pressure method and is also referred to as a bubble lifetime. Specifically, the surface lifetime refers to the time from when a new interface is generated at the tip of a dynamic surface tensiometer probe to when the maximum bubble pressure is reached.

The dynamic surface tension of the treatment liquid or the ink can be measured by using a dynamic surface tensiometer. Examples of the dynamic surface tensiometer include a bubble pressure dynamic surface tensiometer ("BP100" manufactured by KRUSS GmbH).

Unless otherwise specified, the dynamic surface tension herein is the dynamic surface tension measured at 25°C and 15 ms using the maximum bubble pressure method.

In the ink set according to the present invention, the treatment liquid has a dynamic surface tension within a range of 25 to 35 mN/m at a surface lifetime of 50 msec at 25°C. Here, the reason why the dynamic surface tension of the treatment liquid is set within the above range is that when the dynamic surface tension of the treatment liquid is lower than 25 mN/m, the treatment liquid expands and spreads excessively, thereby deteriorating the character reproducibility. On the other hand, when the dynamic surface tension of the treatment liquid is higher than 35 mN/m, the treatment liquid is repelled by the base material, thereby deteriorating the character reproducibility.

In the ink set according to the present invention, the ink preferably has a dynamic surface tension within a range of 35 to 45 mN/min at a surface lifetime of 50 msec at 25°C. By setting the static surface tension of the ink within the above range, the storage stability of the ink is improved, and the ink can be stably ejected onto the recording medium.

In order to make the static surface tension and the dynamic surface tension of the treatment liquid fall within the above ranges, for example, the type and content of a surfactant, the type and content of a water-soluble solvent, the type and content of an aggregating agent are controlled.

Specifically, it is preferable to use various polyether-modified silicones and/or acetylene glycol-based surfactants as the surfactant contained in the treatment liquid. In particular, a trisiloxane-based surfactant is preferably used. In addition, it is preferable that the content of the surfactant is set within a range of 0.1 to 2.0% by mass relative to the treatment liquid.

Further, as the water-soluble solvent, a water-soluble solvent having an SP value of 24 (J/cm³)^{1/2} or more and a boiling point within a range of 150°C to 250°C is preferably used, and the content thereof is preferably within a range of 5 to 40% by mass.

As the aggregating agent, for example, as described later, an organic acid, a polyvalent metal salt, a soluble cationic polymer, or the like is preferably used, and the content of the aggregating agent in the treatment liquid is preferably set within a range of 1 to 8% by mass. Furthermore, the aggregating agent is preferably contained within a range of 1 to 4% by mass. When the content is adjusted to such a range, an anionic component in the ink can be effectively aggregated. As a result, the balance between image quality and hot water resistance is improved.

In order to make the static surface tension and the dynamic surface tension of the ink fall within the above ranges, for example, the type and content of a surfactant, the type and content of a water-soluble solvent, the type and content of a pigment dispersant, the type and content of a resin fine particles, and the type and content of an additive are controlled. Note that as the surfactant, a surfactant that does not impair the storage stability of the ink is used, or a surfactant is used in an amount such that the storage stability is not impaired.

Specifically, it is preferable to use various polyether-modified silicones and/or acetylene glycol-based surfactants as the surfactant contained in the ink. The surfactant content is preferably within a range of 0.1 to 2.0% by mass relative to the ink.

As the water-soluble solvent, a water-soluble solvent having an SP value of 24 (J/cm³)^{1/2} or more and a boiling point within a range of 150°C to 250°C is preferably used, and the content thereof is preferably within a range of 5 to 40% by mass.

In addition, as the pigment dispersant, it is preferable to use various low-molecular dispersants, nonionic polymer dispersants, and anionic polymer dispersants, or to appropriately use a resin-coated pigment dispersion.

Furthermore, as the type of the resin fine particles, it is preferable to use resin fine particles of a polyolefin resin and set the content thereof within a range of 1 to 15% by mass relative to the ink.

The polyolefin resin preferably contains resin particles having a mean particle size within a range of 10 to 80 nm and resin particles having a mean particle size within a range of 100 to 300 nm.

In addition, a wax is preferably used as the additive, and the content thereof is preferably set within a range of 0.1 to 5% by mass relative to the ink.

### [Treatment Liquid]

The treatment liquid according to the present invention can accelerate image formation of the ink by aggregating or thickening the ink when an image is recorded on the base material by an inkjet printing method.

The treatment liquid according to the present invention contains at least an aggregating agent. In addition, the treatment liquid preferably contains a water-soluble solvent, a surfactant, and water.

### < Aggregating Agent >

The treatment liquid according to the present invention contains a material that forms an aggregate upon contact with the ink, that is, an aggregating agent which is a polyvalent metal salt. Due to the aggregating agent, the interaction with the ink is increased, and dots of the ink can be further fixed.

### (Polyvalent Metal Salt)

The polyvalent metal salt can aggregate an anionic component (usually, a color material, a pigment, or the like) in the ink described below by salting out.

As the polyvalent metal salt, a salt of a metal having a valence of two or more can be used. The type of a metal (cation) constituting the polyvalent metal salt is not particularly limited, and examples thereof include: divalent metal ions such as Ca²⁺, Cu²⁺, Ni²⁺, Mg²⁺, Zn²⁺, and Ba²⁺; trivalent metal ions such as Al³⁺, Fe³⁺, Cr³⁺, and Y³⁺; and tetravalent metal ions such as Zr⁴⁺.

The type of a salt constituting the polyvalent metal salt is not particularly limited, and known salts such as carbonate, sulfate, nitrate, hydrochloride, organic carboxylate, organic sulfonate, borate, phosphate, bromide, hydroiodide, and thiocyanate can be used.

Examples of the organic carboxylate include acetic acid, oxalic acid, lactic acid, fumaric acid, citric acid, salicylic acid, and benzoic acid.

Specific examples of particularly preferable polyvalent metal salts include calcium salts and magnesium salts of carboxylic acids such as calcium chloride and magnesium chloride, calcium nitrate and magnesium nitrate, magnesium acetate, calcium acetate and magnesium lactate, and calcium pantothenate.

### (Organic Acid)

The treatment liquid according to the present invention may further contain an organic acid as an aggregating agent in addition to the polyvalent metal salt.

The organic acid contained in the treatment liquid as an aggregating agent is capable of aggregating a color material contained in the ink and preferably has a first dissociation constant of 3.5 or less. In particular, the first dissociation constant is preferably within a range of 1.5 to 3.5. When the constant is within the above range, liquid merging in low-concentration regions is further prevented, and ink mixing (beading) in high-concentration regions is improved.

In addition, by using an organic acid, the storage stability of the treatment liquid is easily maintained, and blocking hardly occurs after the treatment liquid is applied and dried. From the above viewpoint, a preferred organic acid to be contained in the aggregating agent includes: a compound having a carboxy group such as formic acid, acetic acid, propionic acid, isobutyric acid, oxalic acid, fumaric acid, malic acid, citric acid, malonic acid, succinic acid, maleic acid, benzoic acid, 2-pyrrolidone-5-carboxylic acid, lactic acid, acrylic acid and its derivatives, methacrylic acid and its derivatives, acrylamide and its derivatives; a sulfonic acid derivative; and phosphoric acid and its derivatives.

The organic acid is preferably not completely neutralized with a base. The neutralization with a base means that an acidic group of the acid is ionically bonded to another positively charged element or compound (e.g., an inorganic compound such as a metal). Furthermore, the expression "not completely neutralized" means the presence of an acidic group that does not form the above-described ionic bond among the acidic groups of the organic acid.

In addition, by using an organic acid, the storage stability of the treatment liquid is easily maintained, and blocking hardly occurs after the treatment liquid is applied and dried. From the above viewpoint, a preferable organic acid includes formic acid, acetic acid, propionic acid, benzoic acid, and the like.

### (Inorganic Acid)

The treatment liquid according to the present invention may further contain an inorganic acid as an aggregating agent in addition to the polyvalent metal salt. The inorganic acid can aggregate an anionic component in the ink by a pH change.

The inorganic acid is capable of aggregating a pigment that may be contained in the ink described later. Examples of the inorganic acid include hydrochloric acid, nitric acid, sulfuric acid, and sulfamic acid.

In addition, a soluble cationic polymer may be used as an aggregating agent.

Examples of the soluble cationic polymer contained in the treatment liquid include polyallylamine, polyvinylamine, polyethyleneimine, and polydiallyldimethylammonium chloride.

Examples of commercially available products of the soluble cationic polymer include KHE100L and FPA100L manufactured by Senka Corporation, and PAS-92A, PAS-M-1A, and PAS-21CL manufactured by Nittobo Medical Co., Ltd.

The content of the polyvalent metal salt is preferably within a range of 0.5% to 20% by mass and more preferably within a range of 1% to 10% by mass relative to 100% by mass of the total mass of the treatment liquid. As a result, the anionic component in the ink can be effectively aggregated, which is preferable from the viewpoint of balancing the image quality and the hot water resistance.

In addition, when an organic acid is contained, the content of the organic acid is preferably within a range of 0.1 to 10% by mass and more preferably within a range of 1 to 3% by mass relative to 100% by mass of the total mass of the treatment liquid.

In addition, when an inorganic acid is contained, the content of the inorganic acid is preferably within a range of 0.1 to 10% by mass and more preferably within a range of 1 to 3% by mass relative to 100% by mass of the total mass of the treatment liquid.

The content of the polyvalent metal salt or the organic acid in an aqueous solution can be measured by a known method. For example, the content can be measured by ICP emission spectrometry in the case of the polyvalent metal salt, and by high performance liquid chromatography (HPLC) in the case of the organic acid.

Note that when an organic acid is used, the amount of the organic acid added is preferably an amount that adjusts the pH of the treatment liquid to a neutralization equivalent or less of an anion component contained in the ink. In addition, when the anion component is a compound having a carboxy group, the first dissociation constant of the organic acid is preferably 3.5 or less from the viewpoint of further preventing image bleeding.

### < Water-soluble Solvent >

The water-soluble solvent contained in the treatment liquid according to the present invention is preferably a water-soluble solvent having a boiling point within a range of 150 to 250°C.

Examples of the water-soluble solvent include alcohols, polyhydric alcohols, amines, amides, glycol ethers, and 1,2-alkanediols having 4 or more carbon atoms.

Further, it is preferable to use a water-soluble solvent having an SP value of 24 (J/cm³)^{1/2}or more.

The use of the water-soluble solvent having an SP value of 24 (J/cm³)^{1/2} or more decreases the cloud point of the treatment liquid. As a result, in an ink drying step, the ink can be heated to the cloud point of the treatment liquid or higher, and thus, in particular, an image having satisfactory adhesiveness to the non-absorbent base material can be obtained.

Note that in the present invention, the SP value is what is referred to as a solubility parameter. The SP value in the present invention is calculated by the Fedors method. The SP value is determined from the molar evaporation heat of the water-soluble solvent and the molar volume of the water-soluble solvent at 25°C. The unit of the SP value is generally cal. However, when the SP value is converted into the SI unit system, the relationship of (cal/cm³)^{1/2} = 2.046 × 10³ (J/m³)^{1/2} can be used. In the following description, the unit of the SP value may be omitted, but the SP value is expressed in the units of (J/cm³)^{1/2}.

Examples of the water-soluble solvent having an SP value of 24 (J/cm³)^{1/2} or more and a boiling point of 150°C to 250°C include polyhydric alcohols having 2 to 8 carbon atoms and polyalkylene glycols.

Examples of the polyhydric alcohols having 2 to 8 carbon atoms include 1,2-ethanediol (SP value: 30.3, boiling point: 197°C), 1,2-propanediol (SP value: 28.0, boiling point: 188°C), 1,3-propanediol (SP value: 32.9, boiling point: 213°C), 1,2-butanediol (SP value: 26.1, boiling point: 192°C), 1,3-butanediol (SP value: 30.3, boiling point: 207°C), 1,4-butanediol (SP value: 30.7, boiling point: 230°C), 2,3-butanediol (SP value: 29.9, boiling point: 177°C), 2-methyl-1,3-propanediol (SP value: 30.3, boiling point: 214°C), 1,2-pentanediol (SP value: 25.0, boiling point: 210°C), 1,5-pentanediol (SP value: 29.0, boiling point: 242°C), 1,2-hexanediol (SP value: 24.1, boiling point: 223°C), 1,6-hexanediol (SP value: 27.7, boiling point: 249°C), and 2-methylpentane-2,4-diol (SP value: 26.8, boiling point: 197°C).

Examples of the polyalkylene glycols include diethylene glycol (SP value: 30.6, boiling point: 244°C), and dipropylene glycol (SP value: 27.2, boiling point: 230°C).

The treatment liquid may contain one or a combination of two or more selected from these water-soluble solvents.

It is sufficient that at least one water-soluble solvent having a boiling point of 150°C to 250°C is contained in the ink, and the ink may contain alcohols other than those described above, polyhydric alcohols, amines, amides, glycol ethers, and 1,2-alkanediols having 4 or more carbon atoms.

Examples of the solvent other than the water-soluble solvent having a boiling point of 150°C to 250°C include glycerin (SP value: 33.5, boiling point: 290°C), trimethylolpropane (SP value: 32.5, boiling point: 295°C), triethylene glycol (SP value: 27.8, boiling point: 287°C), and tetraethylene glycol (SP value: 26.1, boiling point: 275°C).

The total content of the water-soluble solvent is preferably within a range of 5% to 40% by mass, and more preferably within a range of 10% to 40% by mass, relative to 100% by mass of the total mass of the treatment liquid.

### < Surfactant >

The surfactant contained in the treatment liquid according to the present invention can improve the ejection stability of the treatment liquid from nozzles, and can control the spreading of a droplet (dot size enlargement) landed on a recording medium.

The surfactant is not particularly limited, but when an anionic compound is contained as another constituent component of the ink, the ionicity of the surfactant is preferably of the anionic, nonionic, or betaine type.

In the present invention, it is preferable to use a surfactant having a high static surface tension reducing ability such as fluorine-based or silicone-based surfactants, and a surfactant having a high dynamic surface tension reducing ability such as anionic surfactants such as dioctyl sulfosuccinate, nonionic surfactants such as relatively low molecular weight polyoxyethylene alkyl ethers, polyoxyethylene alkyl phenyl ethers, acetylene glycols, Pluronic surfactants (Pluronic is a registered trademark), and sorbitan derivatives. It is also preferable to use a fluorine-based or silicone-based surfactant in combination with a surfactant having a high dynamic surface tension reducing ability.

An example of the polyoxyethylene alkyl ether includes TRITON HW-1000 (TRITON is a registered trademark) manufactured by The Dow Chemical Company.

By adding a silicone-based or fluorine-based surfactant as the surfactant, it is possible to further suppress the ink mixing (beading) on a recording medium made of various hydrophobic resins such as a vinyl chloride sheet or a recording medium having a low ink absorbing ability such as printing paper. As a result, a printed image having high quality is obtained.

The silicone-based surfactant is preferably a polyether-modified silicone. An example is a siloxane having an alkylene oxide group in a side chain and/or at both ends of a polydimethylsiloxane chain. Specific examples thereof include BYK-331, BYK-333, BYK-345, BYK-3450, BYK-3451, BYK-3455, BYK-346, BYK-347, BYK-348, BYK-349 manufactured by Byk-Chemie GmbH, TEGO Wet KL 245, TEGO Wet 250, TEGO Wet 260, TEGO Wet 270, TEGO Wet 280 manufactured by Evonik Operations GmbH, and KF-351A, KF-352A, KF-353, KF-354L, KF-355A, KF-615A, KF-640, KF-642, KF-643, KF-644, KF-945, KF-6011, KF-6012, KF-6015, KF-6017, KF-6020, KF-6204, X-22-4515 manufactured by Shin -Etsu Chemical Co., Ltd.

As the polyether-modified silicone, trisiloxane having an alkylene oxide group in a side chain and/or at both ends of a polydimethylsiloxane chain is particularly preferable.

The use of the trisiloxane can effectively reduce the dynamic surface tension of the treatment liquid, providing an image with satisfactory adhesiveness to the base material.

The trisiloxane preferably has a structure represented by the following General Formula (1).

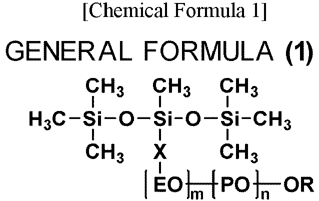

In General Formula (1), "EO" represents a repeating unit structure of polyethylene oxide. That is, "EO" represents a ring-opened structure of ethylene oxide, which is a three-membered cyclic ether.

Further, "PO" represents a repeating unit structure of polypropylene oxide. That is, "PO" represents a ring-opened structure of propylene oxide, which is a three-membered cyclic ether.

Here, "the order of [EO]ₘ and [PO]ₙ may be either order" means that in the compound molecule represented by General Formula (1), the order of the bonding positions with respect to the siloxane skeleton serving as a base may be appropriately changed.

In General Formula (1), X is preferably an alkylene group having 3 carbon atoms (i.e., a propylene group).

Furthermore, in General Formula (1), it is preferable that m is an integer of 5 to 20 and n is an integer of 0 to 6.

As specific examples of the silicone-based surfactant having the structure represented by General Formula (1), S-1 to S-8 are shown below, but the silicone-based surfactant is not limited thereto.
(S-1): in General Formula (1), R = a methyl group, X = an alkylene group having 3 carbon atoms, m = 9, n = 0
(S-2): in General Formula (1), R = a butyl group, X = an alkylene group having 3 carbon atoms, m = 25, n =6
(S-3): in General Formula (1), R = a hydrogen atom, X = an alkylene group having 3 carbon atoms, m = 3, n = 0
(S-4): in General Formula (1), R = a hydrogen atom, X = an alkylene group having 3 carbon atoms, m = 33, n = 0
(S-5): in General Formula (1), R = a hydrogen atom, X = an alkylene group having 3 carbon atoms, m = 22, n = 16
(S-6): in General Formula (1), R = a hydrogen atom, X = an alkylene group having 3 carbon atoms, m = 9, n = 0
(S-7): in General Formula (1), R = a hydrogen atom, X = an alkylene group having 3 carbon atoms, m = 12, n = 3
(S-8): in General Formula (1), R = a hydrogen atom, X = an alkylene group having 3 carbon atoms, m = 1, n = 0

Examples of the trisiloxane include BYK-3450 and BYK-3451 manufactured by Byk-Chemie Japan Co., Ltd., and TEGO Wet-KL245, TEGO Wet-250, and TEGO Wet-260 manufactured by Evonik Operations GmbH.

Furthermore, the content of the polyether-modified silicone is preferably within a range of 0.5 to 2% by mass and more preferably within a range of 0.5 to 1.5% by mass relative to 100% by mass of the total mass of the treatment liquid.

The fluorine-based surfactant means a surfactant in which a part or all of hydrogen bonded to carbon of a hydrophobic group of an ordinary surfactant is substituted with fluorine atoms. Among them, those having a perfluoroalkyl group in the molecule are preferable.

Among the above-described fluorine-based surfactants, certain types are commercially available under the following trade names.
Trade name: Megafac F (Dainippon Ink and Chemicals, Inc.)
Trade name: Surflon (Asahi Glass Co. Ltd.)
Trade name: Fluorad FC (Minnesota Mining and Manufacturing Company)
Trade name: Monflor (Imperial Chemical Industries, Inc.)
Trade name: Zonyls (E. I. du Pont de Nemours and Company)
Trade name: Licowet VPF (Farbwerke Hoechst AG)

In particular, the treatment liquid according to the present invention preferably contains, in the treatment liquid, a surfactant that is not contained in the ink described below, and the following two patterns are exemplified.

When the surfactant contained in the ink is designated as a surfactant S1; (i) the surfactant contained in the treatment liquid is preferably a surfactant S2 that is different from the surfactant S1 contained in the ink; or (ii) the surfactant contained in the treatment liquid preferably includes the surfactant S2 in addition to the surfactant S1.

As a specific preferable combination of the surfactants, as the surfactant contained in the treatment liquid, a polyether-modified silicone or a trisiloxane surfactant is preferable. Furthermore, as the surfactant contained in the ink, an acetylene glycol-based surfactant or the like and polyether-modified silicone or the like are preferable.

As described above, adding a surfactant that is not contained in the ink (i.e., a surfactant that destabilizes the dispersion stability of the ink) to the treatment liquid can further enhance the aggregation property.

The content of the surfactant in the treatment liquid is not particularly limited but is preferably within a range of 0.1 to 5.0% by mass of the total mass of the treatment liquid. Furthermore, the content is more preferably within a range of 0.1 to 2.0% by mass.

### < Water >

The treatment liquid according to the present invention may contain water, and usable water is not particularly limited. For example, ion-exchanged water, distilled water, or pure water can be used.

The treatment liquid may appropriately contain other components, such as a crosslinking agent, an antifungal agent, and a bactericide, to such an extent that the effects of the present invention are not impaired.

Furthermore, various known additives can also be contained, for example, UV absorbers described in JP S57-74193A, S57-87988A and S62-261476A, anti-fading agents, and various anionic, cationic or nonionic surfactants described in JP S57-74192A, S57-87989A, S60-72785A, S61-146591A, H01-95091A, H03-13376A, and the like, fluorescent whitening agents, antifoaming agents, lubricants such as diethylene glycol, preservatives, thickeners, and antistatic agents described in JP S59-42993A, S59-52689A, S62-280069A, S61-242871A and H04-219266A, and the like.

It is preferable to prepare a treatment liquid layer by directly applying and drying the treatment liquid according to the present invention as a coating liquid on the base material. Here, the additives preferably used in the treatment liquid are preferably used as a coating liquid after being sufficiently dissolved.

As a method for applying the treatment liquid, an inkjet method is used.

### [Ink]

The ink according to the present invention contains at least a pigment and a resin. The ink according to the present invention preferably contains a water-soluble solvent, a surfactant, a wax, and water.

### < Pigment >

As the pigment contained in the ink according to the present invention, an anionic dispersion pigment, for example, a self-dispersing pigment having an anionic group on the surface, a pigment dispersed by an anionic polymer dispersant, or a pigment dispersed by coating the surface with an anionic resin is preferably used.

In particular, it is preferable to use a pigment dispersed with an anionic polymer dispersant in that the pigment has excellent dispersibility and appropriately reacts with the treatment liquid to become pinned.

As the pigment, conventionally known pigments can be used without particular limitation, and for example, insoluble pigments, organic pigments such as lake pigments, and inorganic pigments such as titanium oxide can be preferably used.

Note that according to the present invention, it is possible to suppress bleeding and improve adhesiveness in a particularly suitable manner for titanium oxide, for which it is generally difficult to ensure the ink ejection stability and adhesiveness.

Titanium oxide has three crystal forms of an anatase type, a rutile type, and a brookite type, and general-purpose titanium oxides can be roughly classified into the anatase type and the rutile type. Although not particularly limited, a rutile type having a large refractive index and high concealability is preferable. Specific examples thereof include the TR series manufactured by Fuji Titanium Industry Co., Ltd., the JR series manufactured by Tayca Corporation, and TIPAQUE manufactured by Ishihara Sangyo Kaisya, Ltd.

The insoluble pigment is not particularly limited, but for example, azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, diketopyrrolopyrrole, and the like are preferable.

Specific examples of the organic pigment that can be preferably used include the following pigments.

Examples of the pigment for magenta or red include, C. I. Pigment Red 2, C. I. Pigment Red 3, C. I. Pigment Red 5, C. I. Pigment Red 6, C. I. Pigment Red 7, C. I. Pigment Red 15, C. I. Pigment Red 16, C. I. Pigment Red 48:1, C. I. Pigment Red 53:1, C. I. Pigment Red 57:1, C. I. Pigment Red 122, C. I. Pigment Red 123, C. I. Pigment Red 139, C. I. Pigment Red 144, C. I. Pigment Red 149, C. I. Pigment Red 166, C. I. Pigment Red 177, C. I. Pigment Red 178, C. I. Pigment Red 202, C. I. Pigment Red 222, and C. I. Pigment Violet 19.

Examples of the pigment for orange or yellow include C. I. Pigment Orange 31, C. I. Pigment Orange 43, C. I. Pigment Yellow 12, C. I. Pigment Yellow 13, C. I. Pigment Yellow 14, C. I. Pigment Yellow 15, C. I. Pigment Yellow 15:3, C. I. Pigment Yellow 17, C. I. Pigment Yellow 74, C. I. Pigment Yellow 93, C. I. Pigment Yellow 128, C. I. Pigment Yellow 94, C. I. Pigment Yellow 138, and C. I. Pigment Yellow 155. Particularly in terms of the balance between color tone and light fastness, C. I. Pigment Yellow 155 is preferred.

Examples of the pigment for green or cyan include C. I. Pigment Blue 15, C. I. Pigment Blue 15:2, C. I. Pigment Blue 15:3, C. I. Pigment Blue 16, C. I. Pigment Blue 60, and C. I. Pigment Green 7.

Examples of the pigment for black include C. I. Pigment Black 1, C. I. Pigment Black 6, and C. I. Pigment Black 7.

### < Pigment Dispersant >

The ink according to the present invention preferably contains a pigment dispersant for dispersing the pigment.

The pigment dispersant is not particularly limited, but a polymer dispersant having an anionic group is preferable, and a dispersant having a molecular weight within a range of 5000 to 200000 can be suitably used.

Examples of the polymer dispersant include: block copolymers and random copolymers having a structure derived from two or more monomers selected from styrene, styrene derivatives, vinylnaphthalene derivatives, acrylic acid, acrylic acid derivatives, maleic acid, maleic acid derivatives, itaconic acid, itaconic acid derivatives, fumaric acid, and fumaric acid derivatives; salts thereof; polyoxyalkylenes; and polyoxyalkylene alkyl ethers.

The polymer dispersant preferably has an acryloyl group and is preferably added after neutralization with a neutralizing base. Here, the neutralization base is not particularly limited, but is preferably an organic base such as ammonia, monoethanolamine, diethanolamine, triethanolamine, or morpholine. In particular, when the pigment is titanium oxide, the titanium oxide is preferably dispersed with a polymer dispersant having an acryloyl group.

The amount of the polymer dispersant to be added is preferably within a range of 10 to 100% by mass, more preferably within a range of 10 to 40% by mass relative to the pigment.

It is particularly preferable that the pigment has a form of a so-called capsule pigment in which the pigment is coated with the above-described polymer dispersant. As a method for coating the pigment with the polymer dispersant, various known methods can be used, and preferred examples thereof include a phase inversion emulsification method, an acid precipitation method, and a method in which the pigment is dispersed with a polymerizable surfactant, a monomer is supplied thereto, and the pigment is coated with the monomer while polymerizing the monomer.

A particularly preferable method is a method in which a water-insoluble resin is dissolved in an organic solvent such as methyl ethyl ketone, the acidic group in the resin are partially or completely neutralized with a base, the pigment and ion-exchanged water are added thereto, the mixture is dispersed, the organic solvent is removed, and water is added as necessary.

The mean particle size of the pigment particles contained in the pigment in the dispersed state in the ink is preferably within a range of 40 to 200 nm. In particular, it is preferably within a range of 50 to 100 nm. As a result, the dispersion stability of the pigment can be improved, and the storage stability of the ink can be improved.

The particle size of the pigment can be measured by a commercially available particle size measuring apparatus using a dynamic light scattering method, an electrophoresis method, or the like. In particular, measurement by a dynamic light scattering method is simple and can accurately measure the particle size range.

The pigment can be used after being dispersed by a dispersing machine together with a dispersant and other additives necessary for various desired purposes.

As the dispersing machine, a conventionally known ball mill, sand mill, line mill, high-pressure homogenizer or the like can be used. In particular, it is preferable to disperse the pigment by the sand mill because the particle size distribution becomes sharp. In addition, the material of the beads used for the sand mill dispersion is not particularly limited but is preferably zirconia or zircon from the viewpoint of preventing generation of bead fragments or contamination of ion components. Furthermore, the bead size is preferably within a range of 0.3 to 3 mm.

The content of the pigment in the ink is not particularly limited, but the content of the titanium oxide is preferably within a range of 7 to 18% by mass, and the content of the organic pigment is preferably within a range of 0.5 to 7% by mass.

### < Resin >

The resin contained in the ink according to the present invention contains at least a polyolefin resin.

Examples of the polyolefin resin that can be used include a random copolymer or a block copolymer (e.g., an ethylene-propylene-butene copolymer) of polyethylene, polypropylene, an ethylene-propylene copolymer, ethylene, and/or propylene, and another comonomer (e.g., 1-butene, 1-pentene, 1-hexene, 1-heptene, 1-octene, 1-nonene, each having 2 or more carbon atoms, or an α-olefin comonomer having 2 to 6 carbon atoms). Furthermore, a copolymer of two or more of the above other comonomers and a mixture of two or more of the above polymers can be used.

The polyolefin resin may be a commercially available product. Examples of the commercially available polyolefin resin include Arrowbase SB-1200 (manufactured by Unitika Ltd., "Arrowbase" is a registered trade mark of the company), AUROREN 150A, AUROREN AE-301 (manufactured by Nippon Paper Industries Co., Ltd., "AUROREN" is a registered trade mark of the company), SUPERCHLON E-415 (manufactured by Nippon Paper Industries Co., Ltd., "SUPERCHLON" is a registered trade mark of the company), and HARDLEN Na-1001 (manufactured by Toyobo Co., Ltd., "HARDLEN" is a registered trade mark of the company).

In the present invention, among the polyolefin resins, an acid-modified polyolefin resin is preferable from the viewpoint of excellent character reproducibility in a two-liquid inkjet recording method.

The acid-modified polyolefin resin is a resin obtained by modifying a polyolefin resin such as polyethylene or polypropylene with, for example, an unsaturated carboxylic acid such as acrylic acid, methacrylic acid, maleic acid, maleic anhydride, fumaric acid, or itaconic acid. Among the acid-modified polyolefin resins, a polyolefin resin modified with maleic anhydride is preferably used.

Furthermore, it is preferable that the polyolefin resin contains polyolefin particles having a mean particle size within a range of 10 to 80 nm and polyolefin particles having a mean particle size within a range of 100 to 300 nm. It is preferable to mix the resin particles having two different particle size ranges as described above from the viewpoint that the film-forming property is excellent and coating cracks can be prevented.

Hereinafter, the polyolefin particles having a mean particle size within the range of 10 to 80 nm are also referred to as small-sized polyolefin particles. The polyolefin particles having a mean particle size within the range of 100 to 300 nm are also referred to as large-sized polyolefin particles.

The ratio of the content (% by mass) of the small-sized polyolefin resin particles and the large-sized polyolefin resin particles in the polyolefin resin (content of large-sized polyolefin resin particles: content of small-sized polyolefin resin particles) is preferably within a range of 10:90 to 90:10, more preferably within a range of 30:70 to 70:30, and particularly preferably 50:50.

The mean particle size of the polyolefin resin particles can be measured by a commercially available particle size measuring apparatus using a dynamic light scattering method, an electrophoresis method, or the like. In particular, measurement by a dynamic light scattering method is simple and can accurately measure the particle size range.

The content of the polyolefin resin (the total content of the small-sized and large-sized polyolefin resin particles) in the ink is preferably within a range of 1 to 15% by mass.

Note that the resin according to the present invention preferably contains the large-sized polyolefin resin particles and small-sized polyolefin resin particles but is not limited thereto. The resin according to the present invention may include, for example, the small-sized polyolefin particles and other resin particles having a large size (mean particle size of 100 to 300 nm).

Examples of the other resin particles include acrylic resin particles, polyester resin particles, and polyurethane resin particles, and acrylic resin particles are preferable.

As the acrylic resin, commercially available products can be used. Examples of the commercially available products include NeoCryl A -1127 manufactured by Kusumoto Chemicals, Ltd., Mowinyl 6899D, 6969D, 6800, and 6810 manufactured by Japan Coating Resin Co., Ltd., and TOCRYL W-7146, W-7150, and W-7152 manufactured by Toyochem Co., Ltd.

### < Water-soluble Solvent >

The water-soluble solvent contained in the ink according to the present invention is preferably a water-soluble solvent having a boiling point within a range of 150 to 250°C.

Examples of such water-soluble solvents include alcohols, polyhydric alcohols, amines, amides, glycol ethers, and 1,2-alkanediols having 4 or more carbon atoms, including those exemplified for the treatment liquid.

The ink may contain one or a combination of two or more selected from the water-soluble solvents described above.

The content of the water-soluble solvent in the ink is not particularly limited, but is preferably within a range of 10 to 60% by mass.

### < Surfactant >

When a surfactant is contained in the ink according to the present invention, the ejection stability of the ink can be improved, and the spreading of a droplet (dot size) landed on a recording medium can be controlled.

The surfactant that can be used in the ink according to the present invention is not limited, but those exemplified for the treatment liquid can be used, provided that the surfactant does not significantly impair the storage stability of the ink. In particular, as described above, it is preferable that the same surfactant as the surfactant contained in the ink is not contained in the treatment liquid.

The content of the surfactant in the ink is not particularly limited as long as the surfactant does not impair the storage stability of the ink and is preferably within a range of 0.1 to 5.0% by mass. The content is more preferably within a range of 0.1 to 2.0% by mass.

### < Water >

The water contained in the ink according to the present invention is not particularly limited and may be ion-exchanged water, distilled water, or pure water.

### < Wax >

The wax contained in the ink according to the present invention is preferably a polyolefin wax. When the ink contains a polyolefin wax, the water resistance and abrasion resistance of the resulting recorded product are improved.

The polyolefin wax is not particularly limited, and examples thereof include: waxes made from olefins such as ethylene, propylene, and butylene, or derivatives thereof; and copolymers thereof, specifically, polyethylene-based wax, polypropylene-based wax and polybutylene-based wax. Among them, polyethylene-based waxes are preferable from the viewpoint of more effectively reducing the occurrence of cracks in the image. The polyolefin wax can be used alone or in combination of two or more.

The polyolefin wax is preferably used in the form of a polyolefin wax emulsion in which solid wax particles are dispersed in water by the surfactant described above.

As an example of a polyolefin wax emulsion, a method for producing a polyethylene wax emulsion will be described. A polyethylene wax is produced by polymerization of ethylene, synthesis from a hydrocarbon compound, or production by lowering the molecular weight of polyethylene for general molding by thermal decomposition. Next, the polyethylene wax is oxidized to add a carboxy group or a hydroxy group. Furthermore, a surfactant is used for emulsification to obtain a polyethylene wax emulsion in the form of an aqueous wax emulsion, which is excellent in stability.

Examples of commercially available polyolefin waxes include CHEMIPEARL series such as "CHEMIPEARL W4005" (manufactured by Mitsui Chemicals, Inc., polyethylene-based wax, particle size: 200 to 800 nm, softening point (ring and ball method): 110°C, penetration hardness: 3, solids content: 40%). Other examples include AQUACER series such as AQUACER 513 (polyethylene-based wax, particle size: 100 to 200 nm, melting point: 130°C, solids content: 30%), AQUACER 497, AQUACER 513, AQUACER 517 (all manufactured by BYK Additives & Instruments Co., Ltd.), Hitec series such as Hitec E-7025P, Hitec E-2213, Hitec E-9460, Hitec E-9015, Hitec E-4A, Hitec E-5403P, Hitec E-8237 (all manufactured by Toho Chemical Industry Co., Ltd.), and Nopcoat PEM-17 (manufactured by San Nopco Limited, polyethylene emulsion, particle size: 40 nm).

These are commercially available in the form of an aqueous emulsion in which polyolefin wax is dispersed in water by a conventional method. Therefore, any of the commercially available polyolefin waxes described above can be added directly to the ink in the form of an aqueous emulsion.

In the ink used in the present invention, in addition to those described above, various known additives, for example, polysaccharides, viscosity modifiers, specific resistance modifiers, film-forming agents, ultraviolet absorbers, antioxidants, anti-fading agents, antifungal agents, rust-preventive agents, and the like can be appropriately selected and used according to the purpose of improving various performances such as emission stability, compatibility with a print head or an ink cartridge, storage stability, image storability, and the like, if necessary. Examples thereof include: oil-droplet fine particles such as liquid paraffin, dioctyl phthalate, tricresyl phosphate, and silicone oil; ultraviolet absorbers described in JP S57-74193A, JP S57-87988A, and JP S62-261476A; anti-fading agents described in JP S57-74192A, JP S57-87989A, JP S60-72785A, JP S61-146591A, JP H01-95091A, and JP H03-13376A; and fluorescent whitening agents described in JP S59-42993A, JP S59-52689A, JP S62-280069A, JP S61-242871A, and JP H04-219266A.

The ink used in the present invention having the above-described configuration has an ink viscosity of preferably 1 to 40 mPa · s and more preferably 2 to 10 mPa · s at 25°C.

### [Inkjet Recording Method]

In the inkjet recording method according to the present invention, an image is formed by applying the treatment liquid and the ink to a surface of a recording medium by a droplet ejection means and causing the treatment liquid and the ink to coalesce with each other. As described above, the inkjet recording method according to the present invention is a so-called two-liquid recording method.

According to this recording method, for example, the application of the treatment liquid to the surface of the base material (recording medium) and the printing with the ink can be continuously and efficiently performed using a single inkjet printer. In addition, the treatment liquid and the ink can be coalesced on the base material, and variation in dot size between base materials is reduced. As a result, it is possible to print characters, patterns, and the like having excellent image quality.

Specifically, first, the treatment liquid is applied to the base material, and then, without performing a heating and drying step, the ink is applied to a region to which the treatment liquid has been applied while the treatment liquid is still wet.

That is, the inkjet recording method includes a treatment liquid application step and an ink application step.

The treatment liquid application step is a step of applying the treatment liquid to a recording region of the base material.

The ink application step is a step of applying the ink by the inkjet recording method to a region to which the treatment liquid has been applied in the treatment liquid application step while the treatment liquid is still wet.

In addition, the inkjet recording method according to the present invention preferably includes an ink heating and drying step in addition to the above steps.

The ink heating and drying step is a step of heating and drying the treatment liquid and the ink applied onto the base material after the ink application step to form an image (image layer).

In addition, in the ink application step, it is preferable that the ink is applied to the region to which the treatment liquid has been applied while the drying rate of the treatment liquid is 30% or less. In addition, the ink application step is preferably performed within 10 seconds after the treatment liquid application step. In particular, it is preferable to perform the ink application step within 0.1 to 5 seconds after the treatment liquid application step, with the drying rate of the treatment liquid being within a range of 1 to 10%.

### < Base Material >

The base material (recording medium) applicable to the inkjet recording method according to the present invention is a non-absorbent base material made of a non-absorbent material.

In the present invention, the "non-absorbent recording base material (medium)" refers to a recording base material (medium) having a water absorption amount of 10 mL/m² or less from the start of contact to 30 msec in the Bristow method. Details of the test method are described in, for example, Standard No. 51 "Paper and Cardboard - Liquid Absorbency Test Method - Bristow Method" of "JAPAN TAPPI Paper and Pulp Test Methods 2000".

As the non-absorbent base material, a known plastic film can be used.

Specific examples of the known plastic film include: polyester films such as polyethylene terephthalate; polyamide-based films such as polyethylene films, polypropylene films, and nylon; and biodegradable films such as polystyrene films, polyvinyl chloride films, polycarbonate films, polyacrylonitrile films, and polylactic acid films.

Furthermore, in order to impart a gas barrier property, a moisture-proof property, an aroma retention property, and the like, a film coated with polyvinylidene chloride on one side or both sides of the film is preferable. In addition, a film on which a metal oxide is vapor-deposited can also be preferably used. As the non-absorbent film, either an unstretched film or a stretched film can be preferably used.

The thickness of the base material is, in the case of a plastic film, preferably within a range of 10 to 120 µm, more preferably 12 to 60 µm.

In addition, as the non-absorbent base material, a metal base material such as a tin plate or a tin-free steel plate (TFS plate, thickness: 0.1 to 0.6 µm) for use in a three-piece can is also preferably used. For example, the metal base material can be suitably used for a packaging material for canned food in which a thermosetting resin is provided as a coating layer.

As the packaging material for canned food, for example, the following materials are generally used in order to block air, moisture, and light and to seal the food inside. An epoxy-phenol-based paint or a polyester-based laminating agent is used on the inner side, which comes into contact with food, while a polyester-based or acryl-based thermosetting paint is used on the outer side.

Hereinafter, each step of the inkjet recording method will be described.

### < Treatment Liquid Application Step >

In the treatment liquid application step, the above-described treatment liquid is applied onto a recording medium, which is a base material.

The method for applying the treatment liquid onto the recording medium is an inkjet method.

When the base material to be used is a metal base material or the like, it is preferable that the metal base material is disposed on a conveyance belt and a treatment liquid layer is coated and formed on the base material while conveying the belt. Furthermore, it is also preferable to use a flatbed type printer in which the base material is fixed for forming the treatment liquid layer.

Furthermore, in the treatment liquid application step, the amount of the treatment liquid applied (also referred to as the "application amount") per unit area on which an image is formed is preferably 5.0 g/m² or less. In particular, it is preferably within a range of 0.3 to 5.0 g/m². As a result, high character reproducibility can be obtained in the two-liquid inkjet recording method.

### < Ink Application Step >

The ink application step is a step of applying the ink of the above-described ink set by an inkjet method simultaneously with or immediately after applying the treatment liquid onto the recording medium, which is the base material. In particular, after the treatment liquid application step, the ink is preferably applied to a region to which the treatment liquid has been applied while the drying rate of the treatment liquid is 30% or less. In addition, it is preferable that the ink is applied to the region to which the treatment liquid has been applied within 10 seconds after the treatment liquid has been applied to the base material.

Note that the drying rate of the treatment liquid is defined by the following formula. (Drying rate of treatment liquid) = 1- ((Mass (g) of treatment liquid after drying)/ (Mass (g) of treatment liquid before drying))

By applying the ink while the drying rate of the treatment liquid is 30% or less, the ink and the treatment liquid are coalesced and mixed.

Furthermore, applying the ink within 10 seconds after applying the treatment liquid to the base material can suppress permeation of the treatment liquid into an absorbent base material and cissing of the treatment liquid on the non-absorbent base material, thereby achieving higher image quality.

In order to set the drying rate of the treatment liquid to 30% or less, as described above, the time from the application of the treatment liquid to the application of the ink may be adjusted, or the temperature of the recording medium may be appropriately adjusted.

In addition, in the ink application step, it is preferable to adjust the amount of the ink droplets so that the application amount (also referred to as "applied amount") of the ink per unit area is within a range of 2 to 25 times the application amount of the treatment liquid from the viewpoint of achieving higher image quality, and a more preferable range of the application amount is 2.5 to 3.5 times.

The inkjet method is not particularly limited, and a printer including an inkjet head filled with ink can be used. Specifically, printing can be performed by ejecting ink as droplets from nozzles of an inkjet head based on a digital signal and landing the droplets on the treatment liquid layer of the base material.

The inkjet head may be any one of an on-demand type inkjet head and a continuous type inkjet head. Examples of the on-demand type inkjet head include: electro-mechanical conversion types including a single cavity type, a double cavity type, a bender type, a piston type, a share mode type, and a shared wall type; and electrothermal conversion types including a thermal inkjet type and a bubble jet ("Bubble Jet" is a trademark of Canon Inc.) type.

Among the above-described inkjet heads, an inkjet head using a piezoelectric element as an electromechanical conversion element used in an electro-mechanical conversion type (also referred to as a piezoelectric inkjet head) is preferable.

The inkjet printer may include an inkjet head of either a scanning method or a single-pass method. In the case of the single-pass method, it is preferable to use an inkjet head of a line head method.

The inkjet head of the line head method refers to an inkjet head having a length equal to or greater than the width of the printing range. As the inkjet head of the line head method, an inkjet head having one head whose width is equal to or greater than the width of the printing range may be used. Alternatively, a plurality of heads may be combined so as to have a width equal to or greater than the width of the printing range.

In addition, a plurality of heads may be provided so that nozzles are arranged in a staggered pattern, and the resolution of these heads as a whole may be increased.

The conveyance speed of the recording medium as the base material can be set, for example, within a range of 1 to 120 m/min. As the conveyance speed increases, the image forming speed increases.

According to the present invention, it is possible to obtain a high-definition image having high ink fixability even at a very high linear speed of 50 to 120 m/min, which is applicable to a single-pass inkjet image forming method.

### < Ink Heating and Drying Step >

In the ink heating and drying step, the ink applied onto the recording medium, which is the base material, that is, a region where the ink has been applied is heated. As a result, the ink and the treatment liquid can be dried.

In the ink heating and drying step, the heating temperature of the region to which the ink has been applied is preferably within a range of 60 to 200°C. The heating time of the ink is appropriately adjusted in accordance with the type of the recording medium and the ink application amount.

Water, a water-soluble solvent, and the like, which are solvent components of the treatment liquid and the ink, are removed by heating the region where the ink has been applied in this manner. Simultaneously with the removal, particularly in the case of a metal base material, the polyvalent metal salt is dried at a temperature equal to or higher than the thermal decomposition temperature to be thermally decomposed. In addition, the image abrasion resistance and the adhesiveness to the base material become excellent.

In addition, the heating and drying may be performed using, for example, a non-contact heating type drying apparatus such as a drying furnace or a hot-air blower. Alternatively, the heating and drying may be performed using a contact heating type drying apparatus such as a hot plate or a heat roller.

The drying temperature can be obtained by measuring any one selected from the following over the entire period of drying the treatment liquid: (a) an atmosphere temperature such as an in-furnace temperature or a hot-air temperature when a non-contact heating type drying apparatus such as a drying furnace or a hot-air blower is used; (b) a temperature of a contact heating section when a contact heating type drying apparatus such as a hot plate or a hot roller is used; and (c) the surface temperature of a surface to be dried. As a measurement place, (c) the surface temperature of a surface to be dried is more preferably measured.

The thickness of the image layer obtained as described above is preferably within a range of 0.3 to 3.0 µm, and more preferably within a range of 0.3 to 2.0 µm. When the thickness of the image layer is 0.3 µm or more, the adhesiveness and abrasion resistance of the image are easily enhanced. When the thickness of the image layer is 3.0 µm or less, deformation stress imparted to the image layer can be reduced, so that the adhesiveness of the image layer is hardly impaired.

### [Recording Apparatus]

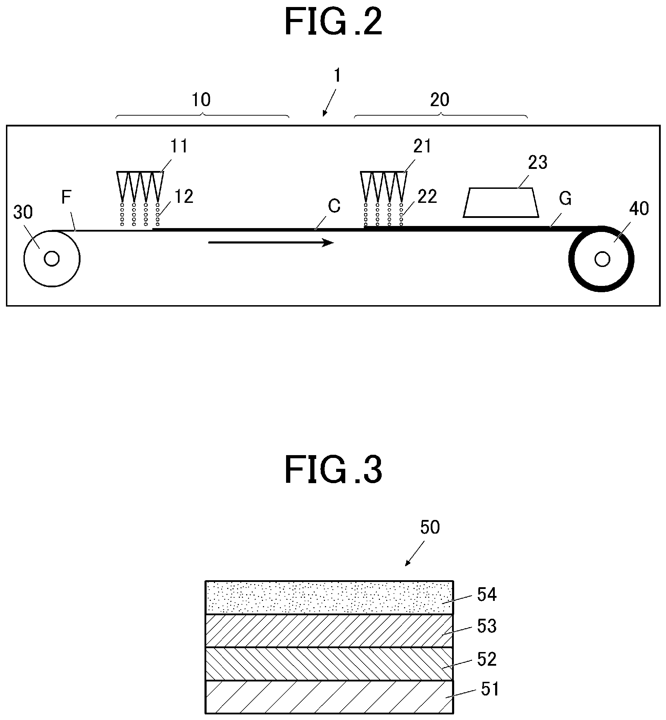

FIG. 2 is a schematic diagram illustrating a recording apparatus preferable for the present invention. However, the present invention is not limited thereto.

The recording apparatus 1 is mainly composed of a treatment liquid application section 10 and an ink application section 20. A treatment liquid is applied onto a base material F in the treatment liquid application section 10, and an ink is applied by the ink application section 20.

The treatment liquid application section 10 is an inkjet head 11 capable of ejecting the treatment liquid onto the base material.

The ink application section 20 is an inkjet head 21 capable of ejecting the ink onto the base material.

In the recording apparatus 1, treatment liquid droplets 12 are ejected from the inkjet head 11 onto the base material F fed from a feed roller 30, and a treatment liquid layer C is formed.

Next, ink droplets 22 are ejected onto the treatment liquid layer C from the inkjet head 21, and the treatment liquid and the ink are coalesced.

Thereafter, a drying section 23 heats and dries a region to which the ink has been applied, and an image layer G is formed. Next, the base material F on which the image layer G has been formed is wound up by a winding roller 40, and an image recorded product is obtained.

Note that FIG. 2 illustrates the case where the base material F is a film base material, but in the case of a metal base material or the like, the metal base material can be disposed on a conveyance belt, and the treatment liquid and the ink can be applied and formed on the base material in one pass while conveying the belt.

Furthermore, in FIG. 2, the apparatus has a configuration in which the ink is applied after the application of the treatment liquid onto the base material, but the apparatus may have a configuration in which the treatment liquid and the ink are applied simultaneously. Alternatively, it is preferable that the ink is ejected from the inkjet head while the drying rate of the treatment liquid layer is 30% or less. Furthermore, after the ink is applied, the treatment liquid may be applied before the ink is dried.

As an apparatus other than the recording apparatus illustrated in FIG. 2, a flatbed type printer is also preferably used for the application of the treatment liquid and the ink. In the flat bed type printer, the base material is fixed, and the inkjet head can be moved in a main scanning direction and a sub-scanning direction intersecting the main scanning direction. Therefore, printing can be performed without conveying the base material.

A metal base material such as tinplate cannot be conveyed in a roll-to-roll manner like a resin film base material. Therefore, it is preferable to use a flatbed type printer for which a base material does not need to be conveyed.

Examples of the flatbed type printer include printers described in FIG. 1 of JP 2015-74161A and FIG. 1 of JP 2017-177578A.

### [Image Recorded Product]

The image recorded product according to the present invention includes a base material, and an image layer formed by applying the treatment liquid and the ink onto the base material using the ink set and causing the treatment liquid and the ink to coalesce with each other.

The above-described configuration indicates a minimum configuration, and another functional layer may be formed between the base material and the image layer. Furthermore, a non-absorbent film base material or the like may be laminated onto the image layer via, for example, a laminating adhesive layer.

As an example of the image recorded product according to the present invention, a configuration in which a first layer containing a thermosetting resin, an image layer containing the treatment liquid and the ink, and a second layer containing a thermosetting resin are laminated in this order on a metal base material is preferable.

Specific examples of the image recorded product preferably include packaging materials for packaging canned foods, retort foods, beverages, and the like.

FIG. 3 shows a cross-sectional view of a canned food packaging material, which is an example of the image recorded product according to the present invention.

A thermosetting resin (for example, TW-1407 series manufactured by T&K TOKA Corporation) is roller-coated on a tinplate base material 51 to form a thermosetting resin layer (base coat) 52. An image layer 53 is formed thereon by coalescing the treatment liquid and the ink. Next, a thermosetting rein (for example, AX-10 series manufactured by T&K TOKA Corporation) is roller-coated thereon to form a thermosetting rein layer (top coat) 54. Thereafter, the resultant is cured by heating and drying to obtain a canned food packaging material 50.

### Examples

Hereinafter, the present invention will be specifically described with reference to Examples, but the present invention is not limited thereto. Note that in the following Examples, operations were performed at room temperature (25°C) unless otherwise specified. Further, unless otherwise specified, "%" and "part(s)" mean "% by mass" and "part(s) by mass", respectively.

### [Preparation of Treatment Liquid T1]

To 4.0% by mass of calcium acetate hydrate as an aggregating agent, 28.0% by mass of propylene glycol and 5.0% by mass of 2-methyl-1,3-propanediol as a solvent, 1.0% by mass of polyoxyethylene alkyl ether (TRITON HW-1000 manufactured by The Dow Chemical Company) as a surfactant, 0.1% by mass of 1,2-benzisothiazolin-3-one (Proxel GXL (S), manufactured by S. C. Johnson & Son Inc.) as an antifungal agent, and ion-exchanged water (remaining amount; amount to make the total amount 100% by mass) were added with stirring. The obtained mixed liquid was filtered through a 1-µm filter to obtain a treatment liquid T1.

### [Preparation of Treatment Liquids T2 and T3]

The type and the addition amount of the aggregating agent and the surfactant in the preparation of the treatment liquid T1 were changed as described in the following Tables I to VI. In accordance with the change, the addition (remaining) amount of ion-exchanged water was also changed. Then, treatment liquids T2 and T3 were prepared in the same manner. Note that in the following Tables, descriptions of the solvent, the antifungal agent, and the ion-exchanged water are omitted.

The abbreviations in the following Tables I to VI are as follows.

### < Surfactant >

"TRITON HW-1000" (manufactured by The Dow Chemical Company): polyoxyethylene alkyl ether
"BYK-3450" (manufactured by Byk-Chemie GmbH): trisiloxane polyoxyalkylene
"Surfynol 440" (manufactured by Nissin Chemical Industry Co., Ltd.): acetylene glycol
"Olfine E1010" (manufactured by Nissin Chemical Industry Co., Ltd.): acetylene glycol
"KF-351A" (manufactured by Shin-Etsu Chemical Co., Ltd.): polyether-modified silicone
"Surflon S242" (manufactured by AGC Seimi Chemical Co., Ltd.): perfluoroalkyl compound

### [Preparation of Black Ink]

### < Preparation of Dispersions of Black Pigments A and B >

To 20% by mass of a black pigment (carbon black), 8% by mass of an anionic polymer dispersant ("Johncryl 819" manufactured by Basf SE), 20% by mass of propylene glycol, 0.1% by mass of an antifungal agent Proxel GXL (S), and ion-exchanged water were added, and the mixture was premixed.

Thereafter, the resulting product was dispersed using a bead mill filled with 50% by volume of 0.3 mm zirconia beads to prepare a pigment dispersion having a pigment content of 20% by mass.

At this time, a dispersion of a black pigment A and a dispersion of a black pigment B were obtained by changing dispersion conditions so as to have the target mean particle sizes (pigment particle sizes) shown in Tables I to VI below.

The mean particle size of the pigment particles contained in these pigment dispersions was 110 nm for the dispersion of the black pigment A and 80 nm for the dispersion of the black pigment B. Note that the mean particle size was measured with "Zetasizer Nano S-90" manufactured by Malvern Panalytical Ltd.

### < Preparation of Dispersion of Polyolefin Resin A >

100 g of a propylene-based random copolymer (propylene component: 96 mol%, ethylene component: 4 mol%, weight average molecular weight: 100,000, and Tm = 125°C), 4 g of maleic anhydride, and 3 g of dicumyl peroxide were thoroughly mixed in advance. Then, the mixture was kneaded and reacted using a twin-screw extruder set at 180°C. Degassing was performed under reduced pressure in the extruder to remove residual unreacted materials, thereby obtaining a maleic anhydride-modified polyolefin resin.

2 kg of the resin was charged into a 50 L reactor, 20 L of chloroform was added thereto, and the mixture was chlorinated at a pressure of 2 kg/cm² by blowing gaseous chlorine from the bottom of the reactor while irradiated with ultraviolet rays. Thus, a sample having a chlorine content of 18% by mass was obtained.

Next, the solvent, chloroform, was removed by distillation using an evaporator, and the solid content was adjusted to 30% by mass. To the chloroform solution, a stabilizer (t-butylphenyl glycidyl ether) was added in an amount of 1.5% by mass relative to the resin, and then the mixture was solidified with a twin-screw extruder set at a barrel temperature of 90°C.

The obtained chlorinated polyolefin resin had a weight average molecular weight of 92,000, a graft mass of maleic anhydride of 3.5% by mass, a chlorine content of 15.5% by mass, and a melting point of 85°C.

Next, a four-necked flask was equipped with a stirrer, a cooling tube, a thermometer, and a funnel. In the four-necked flask, 100 g of the obtained chlorinated modified polyolefin resin, 20 g of a surfactant (N,N-polyoxyalkylene alkylamine), 18 g of 25% aqueous ammonia (neutralizing agent), and 25 g of toluene were added, and the mixture was kneaded at 120°C for 30 minutes.

Thereafter, 290 g of deionized water at 90°C was added thereto over 60 minutes. Subsequently, the solvent was removed under reduced pressure, and the mixture was cooled to room temperature with stirring.

The mean particle size of the resin in the obtained aqueous dispersion of the chlorinated modified polyolefin resin was 73 nm. The aqueous dispersion of the chlorinated modified polyolefin resin obtained here was hereinafter referred to as a dispersion of a polyolefin resin A.

### < Dispersions of Polyolefin Resins B and C >

A four-necked flask was equipped with a stirrer, a cooling tube, a thermometer, and a dropping funnel. In the four-necked flask, 300 g of a propylene-based random copolymer (propylene content: 96 mol%, ethylene content: 4 mol%, weight average molecular weight: 100, 000, Tm = 125°C) was dissolved in 700 g of toluene by heating.

Thereafter, 13 g of maleic anhydride and 12 g of di-t-butyl peroxide as a radical generator were added dropwise over 2 hours with stirring while maintaining the temperature of the system at 115°C. Thereafter, aging was performed for 3 hours.

After the reaction, the mixture was cooled to room temperature, the reaction product was poured into 20 L acetone for purification to obtain a maleic anhydride graft polymer (average molecular weight: 18500) having a grafted amount of 2.1% by mass.

100 g of the obtained modified polyolefin resin was charged into a reaction vessel equipped with a stirrer, a thermometer, a cooling tube and a dropping funnel, and heated and melted at 120°C.

Thereafter, 6 g of morpholine as a basic substance was added thereto with stirring, and 40 g of polyethylene oxide as a surfactant component was further added thereto. After stirring until the mixture became homogenized, 600 g of water was added in small portions to obtain an aqueous product by a phase inversion method.

At this time, the reaction conditions were changed so as to attain the target mean particle size (first or second resin mean particle size) shown in the following Tables I to VI, to obtain each of a dispersion of a polyolefin resin B and a dispersion of a polyolefin resin C.

The mean particle size of the resin particles contained in these resin dispersions was 78 nm for the dispersion of the polyolefin resin B and 108 nm for the dispersion of the polyolefin resin C. Note that the mean particle size was measured with "Zetasizer Nano S-90" manufactured by Malvern Panalytical Ltd.

### < Dispersion of Acrylic Resin D >

As a dispersion of an acryl resin D, NeoCryl A -1127 manufactured by Kusumoto Chemicals, Ltd., which is a commercially available product, was used.

### < Preparation of Black Ink K1 >

To 20.0% by mass of the dispersion of the black pigment A (4.0% by mass as solids (the amount added as solids is indicated in Tables below)), the dispersion of the polyolefin resin A (the amount added was adjusted so that the resin fine particles (solids) in the ink accounted for 4.0% by mass), 27.0% by mass of propylene glycol and 5.0% by mass of 2-methyl-1,3-propanediol as a solvent, 1.0% by mass of trisiloxane polyoxyalkylene (BYK-3450 manufactured by Byk-Chemie GmbH) as a surfactant, 0.1% by mass of 1,2-benzisothiazolin-3-one (Proxel GXL (S) manufactured by S. C. Johnson & Son Inc.) as an antifungal agent, and ion-exchanged water (remaining amount; amount to make the total amount 100% by mass) were added with stirring. The obtained mixed liquid was filtered through a 1-µm filter to obtain a black ink K1. There was no substantial composition change before and after the filtration.

### < Preparation of Black Inks K2 to K12 >

The types and blending amounts (% by mass) of the pigment dispersion, the resin dispersions (the first and second resins), the wax, and the surfactant in the preparation of the black ink K1 were changed as shown in Tables 1 to VI below. In accordance with the change, the addition (remaining) amount of ion-exchanged water was also changed. Then, treatment liquids K2 to K12 were prepared in the same manner. Note that in the following Tables, descriptions of the solvent, the antifungal agent, and the ion-exchanged water are omitted.

As the wax shown in the following Tables, "AQUACER 1547" (manufactured by BYK) was used.

### [Physical Properties]

The static surface tension and dynamic surface tension of each of the obtained treatment liquids and black inks were measured by the following methods.

### < Static Surface Tension >

The static surface tension of the thus prepared treatment liquids and black inks was measured at 25°C using a static surface tensiometer (CBVP-Z manufactured by Kyowa Interface Science Co., Ltd.) using the Wilhelmy method. The measured values (unit: mN/m) are shown in the following Tables I to VI.

### < Dynamic Surface Tension >

The dynamic surface tension of the thus prepared treatment liquids and black inks was measured at a surface lifetime of 50 msec using a dynamic surface tensiometer (BP-100 manufactured by KRUSS GmbH) using the maximum bubble pressure method. The measurement temperature was adjusted to 25°C. The dynamic surface tension (unit: mN/m) at a surface lifetime of 50 msec is shown in the following Tables I to VI.

### [Evaluation]

### < Storage Stability of Ink >

Each of the inks prepared above was stored in a thermostat at 60°C for two weeks, and then the mean particle size was measured with a particle size measuring device (Zetasizer Nano S-90). Thereafter, the ink storability was evaluated according to the following criteria. "AA" and "A" in the following were regarded as having no practical problem.

### (Criteria)

AA: The difference between the mean particle size before and after storage at 60°C for two weeks is less than 10 nm.

A: The difference between the mean particle size before and after storage at 60°C for two weeks is 10 nm or more and less than 30 nm.

B: The difference between the mean particle size before and after storage at 60°C for two weeks is 30 nm or more.

### [Printing Test]

A printing test was carried out by the following method using ink sets in which the treatment liquids and the inks prepared above were combined as in the following Tables I to VI.

A polypropylene base material (#20FOR manufactured by Futamura Chemical Co., Ltd., thickness: 20 µm) was prepared as a recording medium.

A scanning-type printer equipped with two independently driven inkjet heads (360 npi, ejection volume: 6 pL, 1024 nozzles) manufactured by Konica Minolta, Inc. was prepared. A head to be recorded first was filled with each treatment liquid, and a head to be recorded later was filled with each ink.

Thereafter, an image having a resolution of 720 × 720 dpi was divided into two in each of a scanning direction X and a conveyance direction Y to obtain four images (180 × 180 dpi). In a four-pass mode in which one printing region was printed four times, printing was performed in one direction so that the treatment liquid was always recorded first.

The carriage conveyance speed was set to 300 mm/sec, and a drying step was not provided between recording of the treatment liquid and recording of the ink. The printing was tested in an environment of 25°C and 50% RH.

In the recording of the treatment liquid, the maximum printing rate was set to 33%, and the treatment liquid was applied in accordance with the image region of the ink with the application amounts shown in Tables I to VI below. In addition, in the recording of the ink, each ink was printed in a solid pattern with an application amount of 18 g/m².

When the time from the application of the treatment liquid to the application of the ink was measured, it was calculated to be 0.2 seconds.

### [Drying of Recorded Product]

In the printing test, after the ink was applied, the polypropylene film was placed in a dryer set at 90°C and dried by heating for 5 minutes to obtain an image recorded product.

Printing of characters was performed under the same conditions as described above to prepare each evaluation sample (image recorded product).

### [Evaluation]

### < Image Quality (Character Reproducibility) >

Each of the prepared evaluation samples was evaluated for character reproducibility according to the following criteria. "AA" and "A" in the following were regarded as having no practical problem.

### (Criteria)

AA: 8 pt characters are clearly reproduced and can be recognized without any problem.

A: 10 pt characters are clearly reproduced and can be recognized without any problem.

B: Some 10 pt characters are difficult to recognize because they are partially missing.

### < Image Quality (Solid Uniformity) >

A solid portion of each of the prepared evaluation samples was visually evaluated, and furthermore, the reflection density was measured and evaluated according to the following criteria. The reflection density was measured using a fluorescence spectrodensitometer (FD-7 manufactured by Konica Minolta, Inc.) under a D50 light source. "AA" and "A" in the following were regarded as having no practical problem.

### (Criteria)

AA: No streaks or the like on the solid, and reflection density of 1.5 or more
A: No streaks or the like on the solid, and reflection density of 1.3 or more and less than 1.5
B: Visually recognizable streaks, and reflection density of less than 1.3

### < Adhesiveness >

Using a Nichiban Cellotape (Cellotape is a registered trade mark for cellophane tape), a JIS-K5600 adhesiveness test (cross-cut method) was performed on the solid portion of each of the prepared evaluation samples, and the degree of peeling was evaluated. "AA" and "A" in the following were regarded as having no practical problem.

### (Criteria)

AA: No peeling
A: Less than 20% of squares peeled off
B: 20% or more of squares peeled off

### [Table 1]

**TABLE I**

| | | EXAMPLE 1 | | EXAMPLE 2 | | EXAMPLE 3 | |
|---|---|---|---|---|---|---|---|
| INK No. | | K1 | | K2 | | K3 | |
| INK FORMULA | PIGMENT DISPERSION | BLACK PIGMENT A | 4.0% BY MASS | BLACK PIGMENT A | 4.0% BY MASS | BLACK PIGMENT A | 4.0% BY MASS |
| | RESIN PARTICLE DISPERSION (FIRST RESIN) | POLYOLEFIN RESIN A | 4.0% BY MASS | POLYOLEFIN RESIN A | 4.0% BY MASS | POLYOLEFIN RESIN A | 4.0% BY MASS |
| | RESIN PARTICLE DISPERSION (SECOND RESIN) | - | - | - | - | - | - |
| | Wax | - | - | - | - | - | - |
| | SURFACTANT | BYK3450 | 1.0% BY MASS | E1010 /KF351A | 1.0% BY MASS/ 0.2% BY MASS | E1010 /KF351A | 1.2% BY MASS/ 0.4% BY MASS |

| TREATMENT LIQUID No. | | T1 | | T1 | | T1 | |
|---|---|---|---|---|---|---|---|
| TREATMENT LIQUID FORMULA | AGGREGATING AGENT TYPE | CALCIUM ACETATE | 3.0% BY MASS | CALCIUM ACETATE | 3.0% BY MASS | CALCIUM ACETATE | 3.0% BY MASS |
| | SURFACTANT | TRITON HW-1000 | 1.0% BY MASS | TRITON HW-1000 | 1.0% BY MASS | TRITON HW-1000 | 1.0% BY MASS |
| INK PHYSICAL PROPERTIES | PIGMENT PARTICLE SIZE [nm] | 110 | | 110 | | 110 | |
| | FIRST RESIN MEAN PARTICLE SIZE [nm] | 73 | | 78 | | 78 | |
| | SECOND RESIN MEAN PARTICLE SIZE [nm] | N/A | | N/A | | N/A | |
| | STATIC/DYNAMIC SURFACE TENSION [mN/m] | 23/30 | | 28/38 | | 25/36 | |
| TREATMENT LIQUID PHYSICAL PROPERTIES | STATIC/DYNAMIC SURFACE TENSION [mN/m] | 24/33 | | 24/33 | | 24/33 | |
| PRINTING PROCESS | TREATMENT LIQUID APPLICATION AMOUNT [g/m²] | 5.2 | | 5.2 | | 5.2 | |
| CHARACTERISTIC EVALUATION | IMAGE QUALITY (CHARACTER REPRODUCIBILITY) | A | | A | | A | |
| | IMAGE QUALITY (SOLID UNIFORMITY) | A | | A | | A | |
| | ADHESIVENESS | A | | A | | A | |
| | INK STORAGE STABILITY | A | | AA | | AA | |

### [Table 2]

**TABLE II**

| | | EXAMPLE 4 | | EXAMPLE 5 | | EXAMPLE 6 | |
|---|---|---|---|---|---|---|---|
| INK No. | | K4 | | K2 | | K5 | |
| INK FORMULA | PIGMENT DISPERSION | BLACK PIGMENT A | 4.0% BY MASS | BLACK PIGMENT A | 4.0% BY MASS | BLACK PIGMENT A | 4.0% BY MASS |
| | RESIN PARTICLE DISPERSION (FIRST RESIN) | POLYOLEFIN RESIN B | 4.0% BY MASS | POLYOLEFIN RESIN A | 4.0% BY MASS | POLYOLEFIN RESIN A | 2.0% BY MASS |
| | RESIN PARTICLE DISPERSION (SECOND RESIN) | - | - | - | - | POLYOLEFIN RESIN C | 2.0% BY MASS |
| | Wax | - | - | - | - | - | - |
| | SURFACTANT | E1010 /KF351A | 1.0% BY MASS/ 0.2% BY MASS | E1010 /KF351A | 1.0% BY MASS/ 0.2% BY MASS | E1010 /KF351A | 1.0% BY MASS/ 0.2% BY MASS |

| TREATMENT LIQUID No. | | T1 | | T2 | | T1 | |
|---|---|---|---|---|---|---|---|
| TREATMENT LIQUID FORMULA | AGGREGATING AGENT TYPE | CALCIUM ACETATE | 3.0% BY MASS | CALCIUM ACETATE | 3.0% BY MASS | CALCIUM ACETATE | 3.0% BY MASS |
| | SURFACTANT | TRITON HW-1000 | 1.0% BY MASS | BYK3450 | 1.0% BY MASS | TRITON HW-1000 | 1.0% BY MASS |
| INK PHYSICAL PROPERTIES | PIGMENT PARTICLE SIZE [nm] | 110 | | 110 | | 110 | |
| | FIRST RESIN MEAN PARTICLE SIZE [nm] | 78 | | 73 | | 73 | |
| | SECOND RESIN MEAN PARTICLE SIZE [nm] | N/A | | N/A | | 108 | |
| | STATIC/DYNAMIC SURFACE TENSION [mN/m] | 28/38 | | 28/38 | | 28/38 | |
| TREATMENT LIQUID PHYSICAL PROPERTIES | STATIC/DYNAMIC SURFACE TENSION [mN/m] | 24/33 | | 22/29 | | 24/33 | |
| PRINTING PROCESS | TREATMENT LIQUID APPLICATION AMOUNT [g/m²] | 5.2 | | 5.2 | | 5.2 | |
| CHARACTERISTIC EVALUATION | IMAGE QUALITY (CHARACTER REPRODUCIBILITY) | AA | | AA | | A | |
| | IMAGE QUALITY (SOLID UNIFORMITY) | A | | A | | AA | |
| | ADHESIVENESS | A | | A | | A | |
| | INK STORAGE STABILITY | AA | | AA | | AA | |

### [Table 3]

**TABLE III**

| | | EXAMPLE 7 | | EXAMPLE 8 | | EXAMPLE 9 | |
|---|---|---|---|---|---|---|---|
| INK No. | | K6 | | K7 | | K8 | |
| INK FORMULA | PIGMENT DISPERSION | BLACK PIGMENT A | 4.0% BY MASS | BLACK PIGMENT A | 4.0% BY MASS | BLACK PIGMENT B | 4.0% BY MASS |
| | RESIN PARTICLE DISPERSION (FIRST RESIN) | POLYOLEFIN RESIN B | 2.0% BY MASS | POLYOLEFIN RESIN A | 2.0% BY MASS | POLYOLEFIN RESIN A | 4.0% BY MASS |
| | RESIN PARTICLE DISPERSION (SECOND RESIN) | POLYOLEFIN RESIN C | 2.0% BY MASS | ACRYLIC RESIN D | 2.0% BY MASS | - | - |
| | Wax | - | - | - | - | - | - |
| | SURFACTANT | E1010 /KF351A | 1.0% BY MASS/ 0.2% BY MASS | E1010 /KF351A | 1.0% BY MASS/ 0.2% BY MASS | E1010 /KF351A | 1.0% BY MASS/ 0.2% BY MASS |

| TREATMENT LIQUID No. | | T1 | | T1 | | T1 | |
|---|---|---|---|---|---|---|---|
| TREATMENT LIQUID FORMULA | AGGREGATING AGENT TYPE | CALCIUM ACETATE | 3.0% BY MASS | CALCIUM ACETATE | 3.0% BY MASS | CALCIUM ACETATE | 3.0% BY MASS |
| | SURFACTANT | TRITON HW-1000 | 1.0% BY MASS | TRITON HW-1000 | 1.0% BY MASS | TRITON HW-1000 | 1.0% BY MASS |
| INK PHYSICAL PROPERTIES | PIGMENT PARTICLE SIZE [nm] | 110 | | 110 | | 80 | |
| | FIRST RESIN MEAN PARTICLE SIZE [nm] | 73 | | 73 | | 73 | |
| | SECOND RESIN MEAN PARTICLE SIZE [nm] | 108 | | 110 | | N/A | |
| | STATIC/DYNAMIC SURFACE TENSION [mN/m] | 28/38 | | 28/38 | | 28/38 | |
| TREATMENT LIQUID PHYSICAL PROPERTIES | STATIC/DYNAMIC SURFACE TENSION [mN/m] | 24/33 | | 24/33 | | 24/33 | |
| PRINTING PROCESS | TREATMENT LIQUID APPLICATION AMOUNT [g/m²] | 5.2 | | 5.2 | | 5.2 | |
| CHARACTERISTIC EVALUATION | IMAGE QUALITY (CHARACTER REPRODUCIBILITY) | AA | | A | | A | |
| | IMAGE QUALITY (SOLID UNIFORMITY) | AA | | A | | A | |
| | ADHESIVENESS | A | | A | | AA | |
| | INK STORAGE STABILITY | AA | | AA | | AA | |

### [Table 4]

**TABLE IV**

| | | EXAMPLE 10 | | EXAMPLE 11 | | EXAMPLE 12 | |
|---|---|---|---|---|---|---|---|
| INK No. | | K9 | | K10 | | K11 | |
| INK FORMULA | PIGMENT DISPERSION | BLACK PIGMENT B | 4.0% BY MASS | BLACK PIGMENT A | 4.0% BY MASS | BLACK PIGMENT A | 4.0% BY MASS |
| | RESIN PARTICLE DISPERSION (FIRST RESIN) | POLYOLEFIN RESIN B | 2.0% BY MASS | POLYOLEFIN RESIN A | 4.0% BY MASS | POLYOLEFIN RESIN A | 4.0% BY MASS |
| | RESIN PARTICLE DISPERSION (SECOND RESIN) | POLYOLEFIN RESIN C | 2.0% BY MASS | - | - | - | - |
| | Wax | 2.0% BY MASS | 2.0% BY MASS | AQUACER 1547 | 1.0% BY MASS | - | - |
| | SURFACTANT | E1010 /KF351A | 1.0% BY MASS/ 0.2% BY MASS | BYK3450 | 1.0% BY MASS | BYK3450 | 1.0% BY MASS |

| TREATMENT LIQUID No. | | T1 | | T1 | | T1 | |
|---|---|---|---|---|---|---|---|
| TREATMENT LIQUID FORMULA | AGGREGATING AGENT TYPE | CALCIUM ACETATE _3% | 3.0% BY MASS | CALCIUM ACETATE | 3.0% BY MASS | CALCIUM ACETATE | 3.0% BY MASS |
| | SURFACTANT | TRITON HW-1000_1% | 1.0% BY MASS | TRITON HW-1000 | 1.0% BY MASS | TRITON HW-1000 | 1.0% BY MASS |
| INK PHYSICAL PROPERTIES | PIGMENT PARTICLE SIZE [nm] | 80 | | 110 | | 110 | |
| | FIRST RESIN MEAN PARTICLE SIZE [nm] | 73 | | 73 | | 73 | |
| | SECOND RESIN MEAN PARTICLE SIZE [nm] | 108 | | N/A | | N/A | |
| | STATIC/DYNAMIC SURFACE TENSION [mN/m] | 28/38 | | 23/30 | | 23/30 | |
| TREATMENT LIQUID PHYSICAL PROPERTIES | STATIC/DYNAMIC SURFACE TENSION [mN/m] | 24/33 | | 24/33 | | 24/33 | |
| PRINTING PROCESS | TREATMENT LIQUID APPLICATION AMOUNT [g/m²] | 5.2 | | 5.2 | | 4.7 | |
| CHARACTERISTIC EVALUATION | IMAGE QUALITY (CHARACTER REPRODUCIBILITY) | AA | | A | | AA | |
| | IMAGE QUALITY (SOLID UNIFORMITY) | AA | | A | | A | |
| | ADHESIVENESS | AA | | AA | | A | |
| | INK STORAGE STABILITY | AA | | A | | A | |

### [Table 5]

**TABLE V**

| | | EXAMPLE 13 | | EXAMPLE 14 | | EXAMPLE 15 | |
|---|---|---|---|---|---|---|---|
| INK No. | | K11 | | K11 | | K11 | |
| INK FORMULA | TREATMENT LIQUID No. | BLACK PIGMENT A | 4.0% BY MASS | BLACK PIGMENT A | 4.0% BY MASS | BLACK PIGMENT A | 4.0% BY MASS |
| | RESIN PARTICLE DISPERSION (FIRST RESIN) | POLYOLEFIN RESIN A | 4.0% BY MASS | POLYOLEFIN RESIN A | 4.0% BY MASS | POLYOLEFIN RESIN A | 4.0% BY MASS |
| | RESIN PARTICLE DISPERSION (SECOND RESIN) | - | - | - | - | - | - |
| | Wax | - | - | - | - | - | - |
| | SURFACTANT | BYK3450 | 1.0% BY MASS | BYK3450 | 1.0% BY MASS | BYK3450 | 1.0% BY MASS |

| TREATMENT LIQUID No. | | T1 | | T1 | | T1 | |
|---|---|---|---|---|---|---|---|
| TREATMENT LIQUID FORMULA | AGGREGATING AGENT TYPE | CALCIUM ACETATE | 3.0% BY MASS | CALCIUM ACETATE | 3.0% BY MASS | CALCIUM ACETATE | 3.0% BY MASS |
| | SURFACTANT | TRITON HW-1000 | 1.0% BY MASS | TRITON HW-1000 | 1.0% BY MASS | TRITON HW-1000 | 1.0% BY MASS |
| INK PHYSICAL PROPERTIES | PIGMENT PARTICLE SIZE [nm] | 110 | | 110 | | 110 | |
| | FIRST RESIN MEAN PARTICLE SIZE [nm] | 73 | | 73 | | 73 | |
| | SECOND RESIN MEAN PARTICLE SIZE [nm] | N/A | | N/A | | N/A | |
| | STATIC/DYNAMIC SURFACE TENSION [mN/m] | 23/30 | | 23/30 | | 23/30 | |
| TREATMENT LIQUID PHYSICAL PROPERTIES | STATIC/DYNAMIC SURFACE TENSION [mN/m] | 24/33 | | 24/33 | | 24/33 | |
| PRINTING PROCESS | TREATMENT LIQUID APPLICATION AMOUNT [g/m²] | 2 | | 0.5 | | 0.2 | |
| CHARACTERISTIC EVALUATION | IMAGE QUALITY (CHARACTER REPRODUCIBILITY) | AA | | AA | | A | |
| | IMAGE QUALITY (SOLID UNIFORMITY) | A | | A | | A | |
| | ADHESIVENESS | A | | A | | A | |
| | INK STORAGE STABILITY | A | | A | | A | |

### [Table 6]

**TABLE VI**

| | | COMPARATIVE EXAMPLE 1 | | COMPARATIVE EXAMPLE 2 | | COMPARATIVE EXAMPLE 3 | |
|---|---|---|---|---|---|---|---|
| INK No. | | K11 | | K11 | | K12 | |
| INK FORMULA | TREATMENT LIQUID No. | BLACK PIGMENT A | 4.0% BY MASS | BLACK PIGMENT A | 4.0% BY MASS | BLACK PIGMENT A | 4.0% BY MASS |
| | RESIN PARTICLE DISPERSION (FIRST RESIN) | POLYOLEFIN RESIN A | 4.0% BY MASS | POLYOLEFIN RESIN A | 4.0% BY MASS | ACRYLIC RESIN D | 4.0% BY MASS |
| | RESIN PARTICLE DISPERSION (SECOND RESIN) | - | - | - | - | - | - |
| | Wax | - | - | - | - | - | - |
| | SURFACTANT | BYK3450 | 1.0% BY MASS | BYK3450 | 1.0% BY MASS | BYK3450 | 1.0% BY MASS |

| TREATMENT LIQUID No. | | T2 | | T3 | | T3 | |
|---|---|---|---|---|---|---|---|
| TREATMENT LIQUID FORMULA | AGGREGATING AGENT TYPE | CALCIUM ACETATE | 3.0% BY MASS | CALCIUM ACETATE | 3.0% BY MASS | CALCIUM ACETATE | 3.0% BY MASS |
| | SURFACTANT | SURFINOL 440 | 1.0% BY MASS | SURFLON S242 | 1.0% BY MASS | TRITON HW-1000 | 1.0% BY MASS |
| INK PHYSICAL PROPERTIES | PIGMENT PARTICLE SIZE [nm] | 110 | | 110 | | 110 | |
| | FIRST RESIN MEAN PARTICLE SIZE [nm] | 73 | | 73 | | 110 | |
| | SECOND RESIN MEAN PARTICLE SIZE [nm] | N/A | | N/A | | N/A | |
| | STATIC/DYNAMIC SURFACE TENSION [mN/m] | 23/30 | | 23/30 | | 23/30 | |
| TREATMENT LIQUID PHYSICAL PROPERTIES | STATIC/DYNAMIC SURFACE TENSION [mN/m] | 29/31 | | 25/45 | | 24/33 | |
| PRINTING PROCESS | TREATMENT LIQUID APPLICATION AMOUNT [g/m²] | 5.2 | | 5.2 | | 5.2 | |
| CHARACTERISTIC EVALUATION | IMAGE QUALITY (CHARACTER REPRODUCIBILITY) | B | | B | | A | |
| | IMAGE QUALITY (SOLID UNIFORMITY) | B | | B | | A | |
| | ADHESIVENESS | A | | A | | B | |
| | INK STORAGE STABILITY | A | | A | | A | |

As illustrated in the results above, it is found that the ink according to the present invention is excellent in storage stability as compared with the inks of Comparative Examples.

Further, it is recognized that the ink set according to the present invention is excellent in character reproducibility and solid uniformity and also satisfactory in adhesiveness as compared with the ink sets of Comparative Examples.

### Industrial Applicability

The present invention can be used for an ink set and an inkjet recording method in which ink storage stability is satisfactory, image quality is high, and adhesiveness to a non-absorbent base material is satisfactory in a two-liquid inkjet recording method.

### Reference Signs List

- 1: recording apparatus
- 10: treatment liquid application section
- 11: inkjet head
- 12: treatment liquid droplet
- 20: ink application section
- 21: inkjet head
- 22: ink droplet
- 23: drying section
- 30: feed roller
- 40: winding roller
- C: treatment liquid layer
- G: image layer
- F: base material (recording medium)
- 50: canned food packaging material
- 51: tinplate base material
- 52: thermosetting resin layer (base coat)
- 53: image layer
- 54: thermosetting resin layer (top coat)

## Claims

1. An ink set comprising:
an ink that contains at least a pigment; and
a treatment liquid that contains at least an aggregating agent, wherein
an image is formed by applying the ink and the treatment liquid to a recording medium and causing the ink and the treatment liquid to coalesce with each other,
a static surface tension of the treatment liquid is within a range of 18 to 25 mN/m at 25°C,
a dynamic surface tension of the treatment liquid is within a range of 25 to 35 mN/m at a surface lifetime of 50 msec at 25°C,
the ink contains a polyolefin resin, and
the recording medium is a non-absorbent base material.

2. The ink set according to claim 1, wherein
the static surface tension of the ink is within a range of 25 to 35 mN/m at 25°C, and
the dynamic surface tension of the ink is within a range of 35 to 45 mN/min at a surface lifetime of 50 msec at 25°C.

3. The ink set according to claim 1, wherein the polyolefin resin is an acid-modified polyolefin resin.

4. The ink set according to claim 1, wherein the treatment liquid contains a trisiloxane-based surfactant.

5. The ink set according to claim 1, wherein the ink contains polyolefin resin particles having a mean particle size within a range of 10 to 80 nm and resin particles having a mean particle size within a range of 100 to 300 nm.

6. The ink set according to claim 1, wherein the ink contains polyolefin resin particles having a mean particle size within a range of 10 to 80 nm and polyolefin resin particles having a mean particle size within a range of 100 to 300 nm.

7. The ink set according to claim 1, wherein a mean particle size of particles of the pigment is within a range of 50 to 100 nm.

8. The ink set according to claim 1, wherein the ink contains a wax.

9. An inkjet recording method comprising recording the image on the recording medium by using the ink set according to any one of claims 1 to 8.

10. The inkjet recording method according to claim 9, wherein an application amount of the treatment liquid per unit area on which the image is formed is 5.0 g/m² or less.
